(19) Europäisches Patentamt / European Patent Office / Office européen des brevets

(11) **EP 4 697 823 A1**

(12) **EUROPEAN PATENT APPLICATION**
published in accordance with Art. 153(4) EPC

(43) Date of publication:
**18.02.2026 Bulletin 2026/08**

(21) Application number: **24802960.5**

(22) Date of filing: **07.05.2024**

(51) International Patent Classification (IPC):
*H04W 56/00* (2009.01)

(52) Cooperative Patent Classification (CPC):
**H04L 27/26; H04W 52/02; H04W 56/00;
H04W 76/27**

(86) International application number:
**PCT/CN2024/091459**

(87) International publication number:
**WO 2024/230680 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.05.2023 CN 202310533201**

(71) Applicant: **Huawei Technologies Co., Ltd.
Shenzhen, Guangdong 518129 (CN)**

(72) Inventors:
- TIE, Xiaolei
  Shenzhen, Guangdong 518129 (CN)
- ZHOU, Han
  Shenzhen, Guangdong 518129 (CN)
- LI, Qiang
  Shenzhen, Guangdong 518129 (CN)

(74) Representative: **Gill Jennings & Every LLP
The Broadgate Tower
20 Primrose Street
London EC2A 2ES (GB)**

(54) **SIGNAL TRANSMISSION METHOD AND APPARATUS**

(57) This application provides a signal transmission method and an apparatus. The method includes: A terminal device receives a synchronization signal from a network device. The synchronization signal is generated based on a synchronization sequence, the synchronization sequence includes a first ZC sequence and a conjugate sequence of the first ZC sequence, or the synchronization sequence includes a sum of the first ZC sequence and the conjugate sequence of the first ZC sequence. The terminal device detects a wake-up signal based on the synchronization signal. By implementing the foregoing method, the terminal device can perform time synchronization based on the synchronization signal, to estimate a time offset of a correlation peak offset caused by a frequency offset of the synchronization signal. The terminal device adjusts, based on the time offset, a location of a detection window of correlation detection corresponding to the wake-up signal, to implement sliding correlation detection on the wake-up signal based on a low-complexity detection window without increasing a length of the detection window. This reduces power consumption of the terminal device.

FIG. 3

**Description**

CROSS-REFERENCE TO RELATED APPLICATIONS

This application claims priority to Chinese Patent Application No. 202310533201.7, filed with the China National Intellectual Property Administration on May 11, 2023 and entitled "SIGNAL TRANSMISSION METHOD AND APPARATUS", which is incorporated herein by reference in its entirety.

TECHNICAL FIELD

This application relates to the field of communication technologies, and in particular, to a signal transmission method and an apparatus.

BACKGROUND

A terminal device in a radio resource control (radio resource control, RRC) idle (idle) state or an RRC inactive (inactive) state periodically wakes up to receive a paging (paging) message. To further reduce power consumption of the terminal device, the terminal device may use a separate low-power small circuit to receive a paging-related message. The small circuit may be referred to as a wake-up circuit, a low-power circuit, or another name, and a signal received by using the wake-up circuit may be referred to as a wake-up signal (wake-up signal/radio, WUS/WUR).

When the wake-up circuit of the terminal device receives the WUS, a primary receiver (or referred to as a primary circuit) of the terminal device may be triggered to wake up to receive the paging message. When the wake-up circuit of the terminal device does not receive the WUS, the primary receiver may be kept in a sleep state, to reduce power consumption.

The terminal device may use one detection window to reduce power consumption, perform correlation processing on a WUS signal in the detection window and a local sequence, and determine, based on an obtained correlation peak value, which sequence is included in the received WUS. However, if a frequency offset exists in the WUS sent by a network device, the correlation peak value is shifted. If the correlation peak value is out of a range of the detection window due to the shift, the sequence carried in the WUS sent by the network device cannot be correctly detected.

Therefore, how to correctly detect, when the frequency offset exists, the wake-up signal sent by the network device is an urgent problem to be resolved.

SUMMARY

This application provides a signal transmission method and an apparatus, to correctly detect, when a frequency offset exists, a wake-up signal sent by a network device.

According to a first aspect, this application provides a signal transmission method. The method is performed by a terminal device or a module in the terminal device. An example in which the method is performed by the terminal device is used for description herein. The method includes: receiving a synchronization signal from a network device based on a synchronization sequence, where the synchronization sequence includes a first ZC sequence and a conjugate sequence of the first ZC sequence, or the synchronization sequence includes a sum of the first ZC sequence and the conjugate sequence of the first ZC sequence; and detecting a wake-up signal based on the synchronization signal.

By implementing the foregoing method, the terminal device can perform time synchronization based on the synchronization signal, to estimate a time offset of a correlation peak offset caused by a frequency offset of the synchronization signal. The terminal device adjusts, based on the time offset, a location of a detection window of correlation detection corresponding to the wake-up signal, to implement sliding correlation detection on the wake-up signal based on a low-complexity detection window without increasing a length of the detection window. This reduces power consumption of the terminal device.

In a possible implementation, the synchronization sequence occupies one symbol. When the synchronization sequence includes the first ZC sequence and the conjugate sequence of the first ZC sequence, the first ZC sequence occupies a first part of the symbol, the conjugate sequence of the first ZC sequence occupies a second part of the symbol, and duration of the first part is the same as duration of the second part.

In a possible implementation, the synchronization sequence occupies two consecutive symbols. When the synchronization sequence includes the first ZC sequence and the conjugate sequence of the first ZC sequence, the first ZC sequence occupies a first symbol of the two symbols, and the conjugate sequence of the first ZC sequence occupies a second symbol of the two symbols.

In a possible implementation, the detecting the wake-up signal based on the synchronization signal includes: determining a time offset based on the synchronization signal, where the time offset is caused by a frequency offset of the synchronization signal; and adjusting, based on the time offset, a location of a detection window of correlation detection corresponding to the wake-up signal, and detecting the wake-up signal based on the adjusted detection window.

In a possible implementation, the determining the time offset based on the synchronization signal includes: performing correlation processing on the synchronization sequence and the synchronization signal, to determine a time-domain location of a first correlation peak corresponding to the first ZC sequence and a time-domain location of a second correlation peak corresponding to the conjugate sequence of the first ZC sequence; and determining the time offset based on the time-domain location of the first correlation peak and the time-domain location of the second correlation peak.

In a possible implementation, the time offset is a difference between a time-domain location of a third correlation peak and the time-domain location of the first correlation peak, the time-domain location of the third correlation peak is determined based on a time reference point and preset duration, and the time reference point is determined based on the time-domain location of the first correlation peak and the time-domain location of the second correlation peak.

In a possible implementation, when the synchronization sequence occupies the two consecutive symbols, and the synchronization sequence includes the first ZC sequence and the conjugate sequence of the first ZC sequence, the preset duration is half of a length of the symbols; or when the synchronization sequence occupies the one symbol, and the synchronization sequence includes the first ZC sequence and the conjugate sequence of the first ZC sequence, the preset duration is 1/4 of a first length, and the first length is a difference between a length of the symbol and a length of a cyclic prefix of the symbol; or when the synchronization sequence occupies the one symbol, and the synchronization sequence includes the sum of the first ZC sequence and the conjugate sequence of the first ZC sequence, the preset duration is 0.

In a possible implementation, the adjusting, based on the time offset, the location of the detection window of correlation detection corresponding to the wake-up signal includes: shifting the location of the detection window by the time offset based on an initial location of the detection window.

In a possible implementation, a sequence corresponding to the wake-up signal is a sequence obtained by performing cyclic shift on the first ZC sequence.

According to a second aspect, this application provides a signal transmission method. The method is performed by a network device or a module in the network device. An example in which the method is performed by the network device is used for description herein. The method includes: generating a synchronization signal based on a synchronization sequence, where the synchronization sequence includes a first ZC sequence and a conjugate sequence of the first ZC sequence, or the synchronization sequence includes a sum of the first ZC sequence and the conjugate sequence of the first ZC sequence; and sending the synchronization signal to a terminal device.

In a possible implementation, the synchronization sequence occupies one symbol. When the synchronization sequence includes the first ZC sequence and the conjugate sequence of the first ZC sequence, the first ZC sequence occupies a first part of the symbol, the conjugate sequence of the first ZC sequence occupies a second part of the symbol, and duration of the first part is the same as duration of the second part.

In a possible implementation, the synchronization sequence occupies two consecutive symbols. When the synchronization sequence includes the first ZC sequence and the conjugate sequence of the first ZC sequence, the first ZC sequence occupies a first symbol of the two symbols, and the conjugate sequence of the first ZC sequence occupies a second symbol of the two symbols.

In a possible implementation, the method further includes: sending a wake-up signal, where a sequence corresponding to the wake-up signal is a sequence obtained by performing cyclic shift on the first ZC sequence.

According to a third aspect, this application further provides a communication apparatus, and the communication apparatus can implement any method in the first aspect or the second aspect. The communication apparatus may be implemented by hardware, or may be implemented by hardware by executing corresponding software. The hardware or the software includes one or more units or modules corresponding to the foregoing function.

In a possible implementation, the communication apparatus includes a processor. The processor is configured to support the communication apparatus in performing a corresponding function of the network device, the terminal device, or an application server in the foregoing methods. The communication apparatus further includes a memory, and the memory may be coupled to the processor, and stores program instructions and data that are necessary for the communication apparatus. Optionally, the communication apparatus further includes an interface circuit. The interface circuit is configured to support communication between the communication apparatus and a device such as a terminal apparatus.

In a possible implementation, the communication apparatus includes corresponding functional modules that are respectively configured to implement the steps in the foregoing methods. The functions may be implemented by hardware, or may be implemented by hardware by executing corresponding software. The hardware or software includes one or more modules corresponding to the foregoing functions.

In a possible implementation, a structure of the communication apparatus includes a processing unit and a communication unit. These units may perform corresponding functions in the foregoing method examples. For details, refer to descriptions in the method provided in the first aspect or the second aspect. Details are not described herein.

According to a fourth aspect, a communication apparatus is provided, and includes a processor and an interface circuit. The interface circuit is configured to receive a signal from a communication apparatus other than the communication apparatus, and transmit the signal to the processor, or send a signal from the processor to a communication apparatus other than the communication apparatus. The processor is configured to implement the method in the first aspect or the second aspect, and any possible implementation of any aspect by using a logic circuit or by executing code instructions.

According to a fifth aspect, a communication apparatus is provided, and includes a processor and an interface circuit. The interface circuit is configured to receive a signal from a communication apparatus other than the communication apparatus, and transmit the signal to the processor, or send a signal from the processor to a communication apparatus other than the communication apparatus. The processor is configured to implement the functional modules of the method in the first aspect or the second aspect, and any possible implementation of any aspect by using a logic circuit or by executing code instructions.

According to a sixth aspect, a computer-readable storage medium is provided. The computer-readable storage medium stores a computer program or instructions. When the computer program or the instructions are executed by a processor, the method in the first aspect or the second aspect, and any possible implementation of any aspect is implemented.

According to a seventh aspect, a computer program product storing instructions is provided, and when the instructions are run by a processor, the method in the first aspect or the second aspect, and any possible implementation of any aspect is implemented.

According to an eighth aspect, a chip is provided. The chip includes a processor, configured to implement the method in the first aspect or the second aspect, and any possible implementation of any aspect. Optionally, the chip may further include a memory. The chip may include a chip, or may include a chip and another discrete component.

According to a ninth aspect, a circuit is provided. The circuit is configured to perform the descriptions in the method in the first aspect or the second aspect, and the circuit may include a chip circuit. Optionally, the circuit may be further coupled to a memory.

According to a tenth aspect, a communication system is provided, and includes a network device and a terminal device.

The terminal device is configured to implement the method in the first aspect and any possible implementation of the first aspect. The network device is configured to implement the method in the second aspect and any possible implementation of the second aspect.

These or other aspects of this application are more concise and easier to understand in descriptions of the following embodiments.

## BRIEF DESCRIPTION OF DRAWINGS

FIG. 1 is a diagram of a network architecture of a mobile communication system to which an embodiment of this application is applicable;

FIG. 2 is a diagram of a structure of a terminal device according to an embodiment of this application;

FIG. 3 is a schematic flowchart of a signal transmission method according to an embodiment of this application;

FIG. 4 is a diagram of a structure of a synchronization signal according to an embodiment of this application;

FIG. 5 is a diagram of periodic transmission of a synchronization signal according to an embodiment of this application;

FIG. 6 is a diagram of a structure of a synchronization signal according to an embodiment of this application;

FIG. 7 is a diagram of a structure of a synchronization signal according to an embodiment of this application;

FIG. 8 is a diagram of a structure of a synchronization signal according to an embodiment of this application;

FIG. 9 is a diagram of a time offset according to an embodiment of this application;

FIG. 10 is a diagram of a time offset according to an embodiment of this application;

FIG. 11 is a diagram of a time offset according to an embodiment of this application;

FIG. 12 is a diagram of adjusting a detection window according to an embodiment of this application;

FIG. 13 is a diagram of a detection window according to an embodiment of this application;

FIG. 14 is a diagram of a detection window according to an embodiment of this application;

FIG. 15 is a diagram of a structure of a communication apparatus according to an embodiment of this application; and

FIG. 16 is a diagram of a structure of a communication apparatus according to an embodiment of this application.

## DESCRIPTION OF EMBODIMENTS

The following describes in detail embodiments of this application with reference to accompanying drawings of the specification.

Embodiments of this application may be applied to various mobile communication systems, for example, Internet of things (Internet of things, IoT), narrowband Internet of things (narrowband Internet of things, NB-IoT), long term evolution (long term evolution, LTE), a 5th generation (5th generation, 5G) communication system (for example, 5G new radio (new radio, NR)), a hybrid architecture of LTE and 5G, or a new communication system emerging in 6G or future communication development. Embodiments of this application may be further applied to a machine-to-machine (machine to machine, M2M) network, machine type communication (machine type communication, MTC), or another network. A method provided in embodiments of this application may be further applied to fields such as vehicle-to-everything (vehicle to everything, V2X) communication, Internet of vehicles, self-driving, and assisted driving. This is not specifically limited herein.

The method and an apparatus provided in embodiments of this application are based on a same or similar technical concept. Because problem resolving principles of the method and the apparatus are similar, mutual reference may be made to implementations of the apparatus and the method. Repeated descriptions are not described.

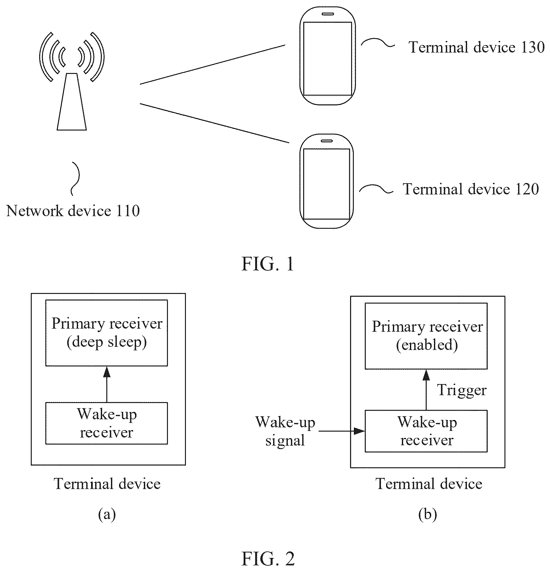

FIG. 1 is a diagram of a network architecture of a mobile communication system to which this application is applicable. As shown in FIG. 1, the mobile communication system includes a network device 110 and at least one terminal device (for example, a terminal device 120 and a terminal device 130 shown in FIG. 1). The terminal device is connected to the network device. The terminal device may be located at a fixed position, or may be mobile. FIG. 1 is merely an example diagram. The communication system may further include another network device, for example, a core network device, a wireless relay device, and a wireless backhaul device, which are not drawn in FIG. 1. A quantity of network devices and a quantity of terminal devices included in the mobile communication system are not limited in embodiments of this application.

The following first describes some terms in embodiments of this application, to facilitate understanding of a person skilled in the art.

In embodiments of this application, the network device may be an access network device in a wireless network. For example, the network device may be a radio access network (radio access network, RAN) node that connects the terminal device to the wireless network, and may also be referred to as an access network device. The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), and a baseband unit (baseband unit, BBU), an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system. Alternatively, the network device may be a network device in a 5G mobile communication system, for example, a next generation NodeB (next generation NodeB, gNB), a transmission reception point (transmission reception point, TRP), or a TP in an NR system, or one antenna panel or one group of antenna panels of a base station in the 5G mobile communication system. Alternatively, the network device may be a network node that forms a gNB or a transmission point, for example, a BBU or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, to implement functions of an RRC layer. The DU is responsible for processing a physical layer protocol and a real-time service, and implementing functions of a radio link control (radio link control, RLC) layer, a media access control (media access control, MAC) layer, and a physical (physical, PHY) layer.

The terminal device in embodiments of this application may be a wireless terminal apparatus that can receive scheduling and indication information from the network device. The terminal device may also be referred to as user equipment (user equipment, UE), a mobile station (mobile station, MS), a mobile terminal (mobile terminal, MT), or the like. Examples of some terminal devices are a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in Internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) communication terminal apparatus, a vehicle-to-everything (vehicle to everything, V2X) communication terminal apparatus, an intelligent vehicle, a telematics box (or referred to as a vehicle-mounted sending unit) (telematics box, T-box), a machine-to-machine/machine-type communications (machine-to-machine/machine-type communications, M2M/MTC) terminal apparatus, an Internet of things (Internet of things, IoT) terminal apparatus, and the like.

In embodiments of this application, an apparatus configured to implement a function of the terminal device may be the terminal device, or may be an apparatus that can support the terminal device in implementing the function, for example, a chip system, where the apparatus may be mounted in the terminal device. The technical solutions provided in embodiments of this application are described by using an example in which the apparatus configured to implement the function of the terminal device is the terminal device.

In embodiments of this application, the terminal device may include two receivers or receiving modules: a primary receiver (which may also be referred to as a primary circuit, a primary module, or a primary receiving module) and a wake-up receiver (which may also be referred to as a wake-up circuit, a low power consumption circuit, a secondary module, or a secondary receiving module). Power consumption of the wake-up receiver during operation is far less than power consumption of the primary receiver during operation. For example, power consumption of the wake-up receiver is less than 1 milliwatt (mW), and average power consumption of the primary receiver may reach hundreds of milliwatts. As shown in (a) in FIG. 2, the primary receiver of the terminal device may be in a disabled state or set to a deep sleep state. For example, when the terminal device is in an RRC idle state or an RRC inactive state, the primary receiver may be set to the deep sleep state. As shown in (b) in FIG. 2, if the wake-up receiver receives a wake-up signal, the primary receiver may be triggered to wake up, and the primary receiver is set to an enabled state. If the wake-up receiver does not receive a wake-up signal, the primary receiver remains in the deep sleep state, to reduce power consumption overheads of the terminal device.

In embodiments of this application, the signal monitored by the wake-up receiver is referred to as a "WUR signal", a "wake-up signal", a "WUS", a "signal transmitted on a wake-up link", or the like. For ease of description, the signals are collectively referred to as a wake-up signal below.

In this application, the wake-up receiver may receive a wake-up signal modulated through on-off keying (on-off key, OOK) or frequency shift keying (frequency shift keying, FSK) or based on a sequence.

When the wake-up signal is modulated by using OOK, each bit (where the bit may be an encoded bit) corresponds to one symbol (which may also be referred to as one chip (chip)). When the bit is 1, a signal is sent in a length of the symbol (that is, a signal power is not 0 in the length of the symbol). When the bit is 0, no signal is sent in the length of the symbol (that is, the signal power is 0 in the length of the symbol). It should be understood that, there may be a reverse case. To be specific, when the bit is 0, a signal is sent in a length of the symbol (that is, a signal power is not 0 in the length of the symbol). When the bit is 1, no signal is sent in the length of the symbol (that is, the signal power is 0 in the length of the symbol). This is not limited in this application. Optionally, when OOK is used for modulation, one symbol may also carry a plurality of bits.

When the wake-up signal is modulated through FSK, different information uses different frequency resources. For example, when an information bit is 0, information may be sent on a frequency resource f0, and no information is sent on a frequency resource f1; or when an information bit is 1, information may be sent on a frequency resource f1, and no information is sent on a frequency resource f0. When demodulating the signal, a receiving end may compare power on f0 and f1 to determine whether sent information is 0 or 1.

In this application, modulating the wake-up signal based on a sequence is that, when sending the wake-up signal, the network device may carry different information by using different sequences carried in orthogonal frequency division multiplexing (orthogonal frequency division multiplexing, OFDM) symbols or OOK symbols included in the wake-up signal. For example, there are four sequences in total: {sequence 1, sequence 2, sequence 3, sequence 4}, information indicated by the sequence 1 is 00, information indicated by the sequence 2 is 01, information indicated by the sequence 3 is 10, and information indicated by the sequence 4 is 11. The terminal device may perform correlation (correlation) processing on the sequences in the received wake-up signal and a local sequence, and determine, based on an obtained correlation peak value, which sequence is the received sequence.

The terminal device may use one detection window to reduce power consumption, perform correlation processing on a signal, in the detection window, in the wake-up signal and the local sequence. However, due to the Doppler effect and frequency drift of a crystal oscillator of the terminal device, the wake-up signal received by the terminal device has a frequency offset. In this case, compared with an original correlation peak, the correlation peak value obtained by the terminal device through correlation processing is shifted. If the correlation peak value is out of a range of the detection window, the sequence carried in the wake-up signal sent by the network device cannot be correctly detected. In view of this, this application provides a method, to correctly detect, when a wake-up signal has a frequency offset, the wake-up signal sent by a network device.

A network architecture and a service scenario that are described in embodiments of this application are intended to describe technical solutions in embodiments of this application more clearly, and do not constitute any limitation on the technical solutions provided in embodiments of this application. A person of ordinary skill in the art may learn that the technical solutions provided in embodiments of this application are also applicable to a similar technical problem as the network architecture evolves and a new service scenario emerges.

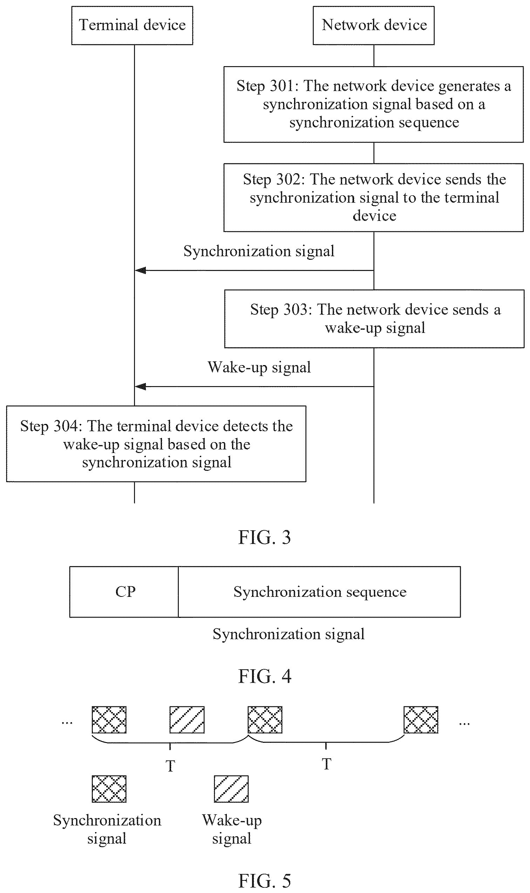

FIG. 3 is a schematic flowchart of a signal transmission method according to an embodiment of this application. When the method procedure is applied to the system shown in FIG. 1, the network device or the module or the chip in the network device in FIG. 1 may perform the method performed by the network device in the following procedure, and the terminal device or the module or the chip in the terminal device in FIG. 1 may perform the method performed by the terminal device in the following procedure. It may be understood that a specific structure of an execution body of the method provided in embodiments of this application is not specifically limited in embodiments shown below, provided that a program that records code of the method provided in embodiments of this application can be run to perform communication according to the method provided in embodiments of this application. The following uses only the terminal device or the network device as an example for description.

Step 301: The network device generates a synchronization signal based on a synchronization sequence.

The synchronization signal sent by the network device includes the synchronization sequence, or the synchronization signal is used to carry the synchronization sequence. For example, as shown in FIG. 4, when the synchronization signal occupies one symbol, the synchronization signal includes a cyclic prefix (cyclic prefix, CP) and the synchronization sequence, and the CP is located in the forefront of the symbol. In the following description, unless otherwise specified, the symbol may be an OFDM symbol. The OFDM symbol includes a CP, and therefore may also be referred to as a CP-OFDM symbol.

In an implementation, the synchronization sequence includes a first ZC (Zadoff-Chu) sequence and a conjugate sequence of the first ZC sequence. In this implementation, the synchronization sequence may be divided into two parts: A first part is the first ZC sequence, and a second part is the conjugate sequence of the first ZC sequence.

In another implementation, the synchronization sequence includes a sum of the first ZC sequence and the conjugate sequence of the first ZC sequence. In this implementation, the synchronization sequence may be a sequence obtained by adding the first ZC sequence and the conjugate sequence of the first ZC sequence.

In this application, the synchronization signal is used for time and frequency synchronization between the terminal device and the network device, the synchronization sequence in the synchronization signal is a sequence agreed on by the network device and the terminal device, and before receiving the synchronization signal, the terminal device can determine the synchronization sequence included in the synchronization signal sent by the network device.

Step 302: The network device sends the synchronization signal to the terminal device.

Correspondingly, the terminal device receives the synchronization signal from the network device based on the synchronization sequence.

The terminal device may be in an RRC idle state or an RRC inactive state.

In this application, the terminal device may locally store a synchronization sequence, to receive the synchronization signal based on the locally stored synchronization sequence.

In an implementation, the terminal device may receive the synchronization signal by using a wake-up receiver.

In an implementation, synchronization signals may be periodically sent, and a sending period of the synchronization signals may be predefined, or may be configured by the network device.

For example, as shown in FIG. 5, the network device sends the synchronization signals based on a period T. The network device may send at least one wake-up signal between two synchronization signals.

In another implementation, the synchronization signal and the wake-up signal may be sent through an associated channel, that is, after sending a synchronization signal, the network device sends a wake-up signal.

In embodiments of this application, the synchronization sequence may occupy one symbol or a plurality of consecutive symbols. In this application, "the synchronization sequence may occupy one symbol or a plurality of consecutive symbols" may alternatively mean that a synchronization signal generated based on the synchronization sequence occupies one symbol or a plurality of consecutive symbols.

The symbol may be an OFDM symbol, an OOK symbol, or the like. This is not limited in this application. In the following descriptions of this application, unless otherwise specified, the synchronization sequence may be the synchronization sequence locally stored by the terminal device, or may be the synchronization sequence included in the synchronization signal sent by the network device. The two synchronization sequences are the same.

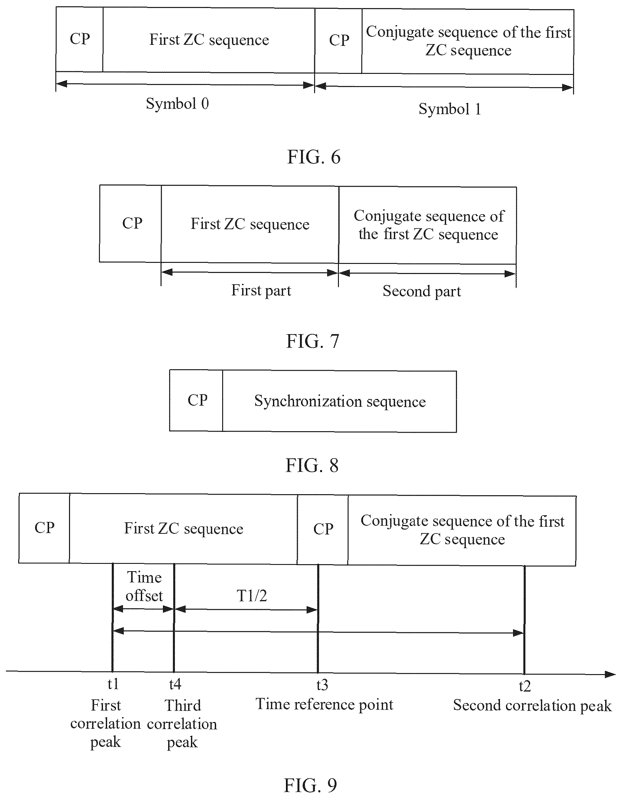

For example, as shown in FIG. 6, the synchronization sequence occupies two consecutive symbols. If the synchronization sequence includes the first ZC sequence and the conjugate sequence of the first ZC sequence, the first ZC sequence occupies a first symbol (a symbol 0 in the figure) of the two symbols, and the conjugate sequence of the first ZC sequence occupies a second symbol (a symbol 1 in the figure) of the two symbols. The forefront of each symbol further includes a CP, and the synchronization sequence may occupy a part of each symbol other than the CP.

For example, as shown in FIG. 7, the synchronization sequence occupies one symbol. If the synchronization sequence includes the first ZC sequence and the conjugate sequence of the first ZC sequence, the first ZC sequence occupies a first part of the symbol, the conjugate sequence of the first ZC sequence occupies a second part of the symbol, and duration of the first part is the same as duration of the second part. The first ZC sequence may be located before the conjugate sequence of the first ZC sequence. The forefront of the symbol further includes a CP, and the synchronization sequence may occupy a part of the symbol other than the CP.

For example, as shown in FIG. 8, the synchronization sequence occupies one symbol. If the synchronization sequence includes the sum of the first ZC sequence and the conjugate sequence of the first ZC sequence, the synchronization sequence may occupy a part of the symbol other than the CP.

Step 303: The network device sends the wake-up signal.

Step 304: The terminal device detects the wake-up signal based on the synchronization signal.

In an implementation, the terminal device may detect the wake-up signal by using the wake-up receiver.

In this application, a sequence corresponding to the wake-up signal is a sequence obtained by performing cyclic shift on the first ZC sequence.

In this application, the terminal device may determine a time offset based on the synchronization signal, and the time offset is caused by a frequency offset of the synchronization signal.

In an implementation, the terminal device performs correlation processing on the synchronization sequence and the synchronization signal, to obtain a time-domain location of a first correlation peak corresponding to the first ZC sequence and a time-domain location of a second correlation peak corresponding to the conjugate sequence of the first ZC sequence. The terminal device may perform correlation processing on a local sequence corresponding to the synchronization signal and a sampling sequence of the synchronization signal. A specific process of correlation processing is not limited in this application. This application does not limit how the terminal device performs correlation processing to obtain the time-domain location of the first correlation peak and the time-domain location of the second correlation peak. Details are not described herein again.

For example, for the sampling sequence $s_i$, where i=0, 1, 2, ..., n-1, and the local sequence $l_i$, where i=0, 1, 2, ..., m-1, a correlation operation on the two sequences is $\sum_{k=-K}^{k=K} s_i * (l_{i-k})^*$, where $(l_{i-k})^*$ indicates a conjugate of $l_{i-k}$. In this example, k is a sliding step, a sliding range corresponds to {-K, ..., -1, 0, 1, ..., K}, and a size of a corresponding correlation detection window is 2K+1. In the detection window, a location of a maximum correlation value is usually referred to as a location of a correlation peak.

In this application, in an example, a location of the detection window corresponds to a location at which a sliding step is 0 in the detection window.

In an example, the local sequence in this application may be the sum of the first ZC sequence and the conjugate sequence of the first ZC sequence. In another example, in this application, a local sequence used for correlation on the first ZC sequence is the first ZC sequence, and a local sequence used for correlation on the conjugate sequence of the first ZC sequence is the conjugate sequence of the first ZC sequence.

The terminal device may determine the time offset based on the time-domain location of the first correlation peak and the time-domain location of the second correlation peak. For example, the terminal device may determine a time reference point based on the time-domain location of the first correlation peak and the time-domain location of the second correlation peak, and the time reference point may be an average value of the time-domain location of the first correlation peak and the time-domain location of the second correlation peak. The terminal device may determine a time-domain location of a third correlation peak based on the time reference point and preset duration, and the time offset is a difference between the time-domain location of the third correlation peak and the time-domain location of the first correlation peak.

For example, as shown in FIG. 9, if the synchronization sequence occupies two consecutive symbols, and the synchronization sequence includes the first ZC sequence and the conjugate sequence of the first ZC sequence, the preset duration is half of a length of the symbols, and is represented by (T1)/2 in the figure, where T1 indicates the length of the symbols. The first ZC sequence occupies the first symbol (the symbol 0 in the figure) of the two symbols, and the conjugate sequence of the first ZC sequence occupies the second symbol (the symbol 1 in the figure) of the two symbols.

After the terminal device performs correlation processing on the synchronization sequence and the synchronization signal, the obtained time-domain location of the first correlation peak is t1, and the obtained time-domain location of the second correlation peak is t2. The terminal device may use an average location of the time-domain location t1 of the first correlation peak and the time-domain location t2 of the second correlation peak as the time reference point, namely, a time reference point t3 in the figure.

The terminal device uses, as a time-domain location t4 of the third correlation peak, a location whose distance to the time reference point is the preset duration, where the third correlation peak is located between the first correlation peak and the time reference point. In this case, the time offset is a difference between the time-domain location of the third correlation peak and the time-domain location of the first correlation peak, that is, the time offset P = t4 - t1.

In this application, the location whose distance to the time reference point is the preset duration is used as the time-domain location t4 of the third correlation peak, and the third correlation peak is shifted by the preset duration to the left from the time reference point, that is, shifted by negative preset duration. An offset direction of the third correlation peak relative to the time reference point may be pre-agreed or pre-specified, or may be configured by the network device.

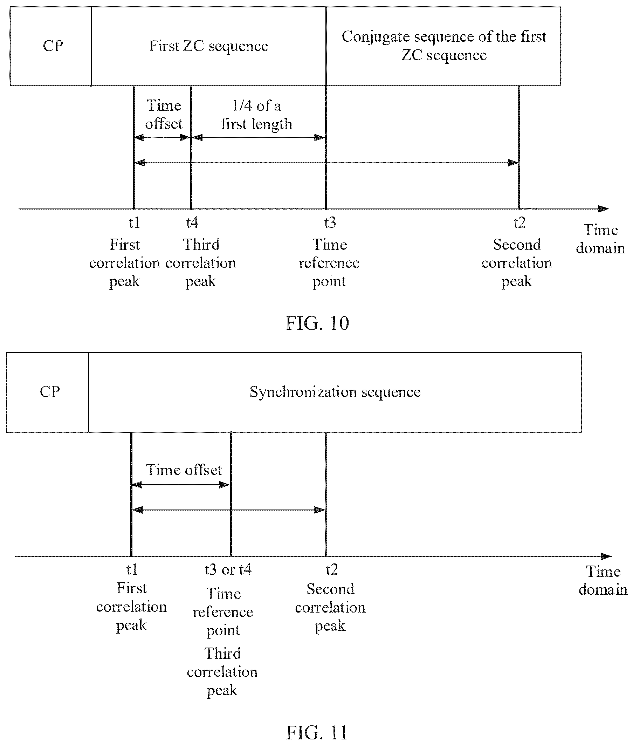

For example, as shown in FIG. 10, when the synchronization sequence occupies one consecutive symbol, and the synchronization sequence includes the first ZC sequence and the conjugate sequence of the first ZC sequence, the preset duration is 1/4 of a first length, and the first length is a difference between a length of the symbol and a length of a cyclic prefix of the symbol, that is, a part that does not include a CP in a CP-OFDM symbol.

Similarly, after the terminal device performs correlation processing on the synchronization sequence and the synchronization signal, the obtained time-domain location of the first correlation peak is t1, and the obtained time-domain location of the second correlation peak is t2. The terminal device may use an average location of the time-domain location t1 of the first correlation peak and the time-domain location t2 of the second correlation peak as the time reference point, namely, the time reference point t3 in the figure. In this example, the time reference point corresponds to the middle location of the part that does not include a CP in the CP-OFDM symbol.

The terminal device uses, as the time-domain location t4 of the third correlation peak, a location whose distance to the time reference point is the preset duration, where the third correlation peak is located between the first correlation peak and the time reference point. In this case, the time offset is a difference between the time-domain location of the third correlation peak and the time-domain location of the first correlation peak, that is, the time offset P = t4 - t1.

In this application, the location whose distance to the time reference point is the preset duration is used as the time-domain location t4 of the third correlation peak, and the third correlation peak is shifted by the preset duration to the left from the time reference point, that is, shifted by negative preset duration. An offset direction of the third correlation peak relative to the time reference point may be pre-agreed or pre-specified, or may be configured by the network device.

For example, as shown in FIG. 11, if the synchronization sequence occupies one consecutive symbol, and the synchronization sequence includes the sum of the first ZC sequence and the conjugate sequence of the first ZC sequence, the preset duration is 0. The first ZC sequence and the conjugate sequence of the first ZC sequence simultaneously occupy the OFDM symbol.

Similarly, after the terminal device performs correlation processing on the synchronization sequence and the synchronization signal, the obtained time-domain location of the first correlation peak is t1, and the obtained time-domain location of the second correlation peak is t2. The terminal device may use an average location of the time-domain location t1 of the first correlation peak and the time-domain location t2 of the second correlation peak as the time reference point, namely, the time reference point t3 in the figure.

The terminal device uses, as the time-domain location t4 of the third correlation peak, a location whose distance to the time reference point is the preset duration. Because the preset duration is 0, the time-domain location of the third correlation peak overlaps the time reference point. In this case, the time offset is a difference between the time-domain location of the third correlation peak and the time-domain location of the first correlation peak, that is, the time offset P = t4 - t1.

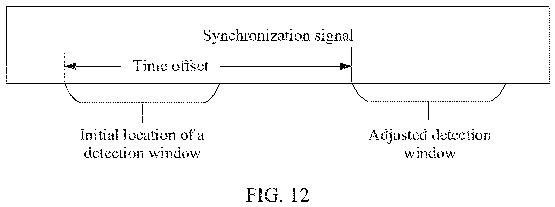

In this application, the terminal device determines the time offset, and may adjust, based on the time offset, a location of a detection window of correlation detection corresponding to the wake-up signal. For example, as shown in FIG. 12, the terminal device shifts, by the time offset based on an initial location of the detection window, the location of the detection window of correlation detection corresponding to the wake-up signal, to obtain the adjusted detection window.

In this application, it is assumed that there is no time offset or frequency offset between the terminal device and the network device, and the initial location of the detection window is obtained based on a location on a first arrival path or a location on a strongest path of the synchronization signal.

In this application, the terminal device receives the synchronization signal, to obtain the time reference point, and completes time synchronization with the network device based on the time reference point, to determine a start location of a symbol occupied by the synchronization signal, and determine a symbol boundary of each CP-OFDM symbol.

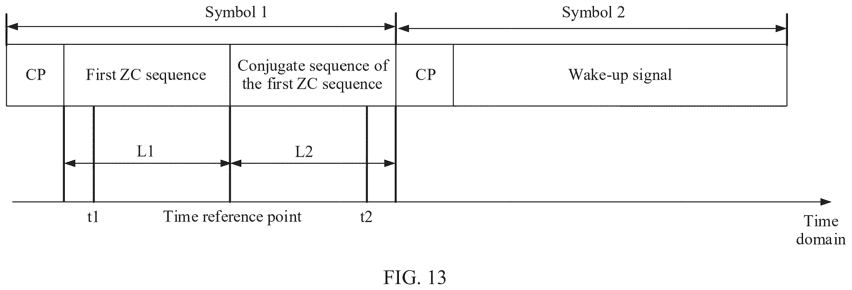

For example, as shown in FIG. 13, the synchronization signal is located in a symbol 1, and the wake-up signal is located in a symbol 2. The symbol 1 and the symbol 2 are two adjacent symbols. The synchronization signal in the symbol 1 includes the first ZC sequence and the conjugate sequence of the first ZC sequence. The terminal device may determine, by receiving the synchronization signal, that the time-domain location of the first correlation peak is t1 and the time-domain location of the second correlation peak is t2. The average value of t1 and t2 is the time reference point. A length of a CP in a symbol is known. A length L1 between an end location of the CP and the time reference point is equal to a length L2 between the time reference point and an end location of the symbol. Therefore, the terminal device can determine a start location and an end location of the symbol 1 corresponding to the synchronization signal. Therefore, the terminal device can determine a start location of the symbol 2 of the wake-up signal.

Based on a predefined time relationship between the wake-up signal and the synchronization signal, a start location of the wake-up signal can be determined based on a start location of the synchronization signal. If the wake-up signal occupies a plurality of OFDM symbols, an initial location of a detection window of the wake-up signal in each symbol may be determined based on a start location of the OFDM symbol (for example, by subtracting the length of the CP from the start location).

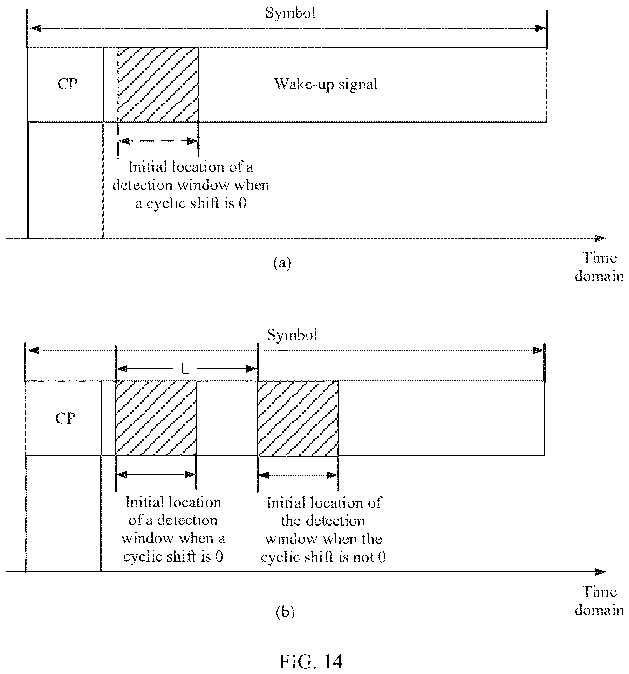

The initial location of the detection window of the wake-up signal in the symbol may alternatively be related to a cyclic shift (cyclic shift) location of the corresponding sequence. For example, as shown in (a) in FIG. 14, when the local sequence for detecting the wake-up signal is a first sequence, and a cyclic shift is 0, the initial location of the detection window is a first location. As shown in (b) in FIG. 14, if the cyclic shift of the first sequence corresponding to the current symbol is greater than 0, and is assumed to be L, the initial location of the detection window is correspondingly shifted by a time length corresponding to the cyclic shift, that is, shifted by L. In this case, the initial location of the detection window is a second location that is shifted by L from the first location.

The terminal device may detect the wake-up signal based on the adjusted detection window. A specific process of detecting the wake-up signal is not limited in this application. For example, the terminal device may perform correlation processing on the local sequence and the sequence of the wake-up signal in the detection window, to obtain a correlation peak value. If the correlation peak value is greater than a preset threshold, it may be considered that the sequence of the wake-up signal is detected, that is, the wake-up signal is detected by the terminal device. If the terminal device determines that the wake-up signal is used to wake up the terminal device, the wake-up receiver of the terminal device may trigger a primary receiver of the terminal device to be enabled, and the terminal device receives information such as a paging message by using the primary receiver.

In this application, each time the terminal device receives a synchronization signal, the terminal device may perform the foregoing procedure for one time, to determine a time offset, and update, in real time, the location of the detection window of the correlation detection corresponding to the wake-up signal based on the time offset.

By implementing the foregoing method, the terminal device can perform time synchronization based on the synchronization signal, to estimate a time offset of a correlation peak offset caused by a frequency offset of the synchronization signal. The terminal device adjusts, based on the time offset, the location of the detection window of correlation detection corresponding to the wake-up signal, to implement sliding correlation detection on the wake-up signal based on a low-complexity detection window without increasing a length of the detection window. This reduces power consumption of the terminal device.

In the foregoing embodiments provided in this application, the method provided in embodiments of this application is separately described from a perspective of interaction between the devices. To implement the functions in the method provided in the foregoing embodiments of this application, the network device, the terminal device, or the application server may include a hardware structure and/or a software module, to implement the foregoing functions in a form of the hardware structure, the software module, or a combination of the hardware structure and the software module. Whether a function in the foregoing functions is performed in a form of the hardware structure, the software module, or both the hardware structure and the software module depends on a specific application and a design constraint condition of the technical solutions.

In embodiments of this application, division into the modules is an example, and is merely logical function division. During actual implementation, another division manner may be used. In addition, functional modules in embodiments of this application may be integrated into one processor, each functional module may exist alone physically, or two or more modules may be integrated into one module. The integrated module may be implemented in a form of hardware, or may be implemented in a form of a software functional module.

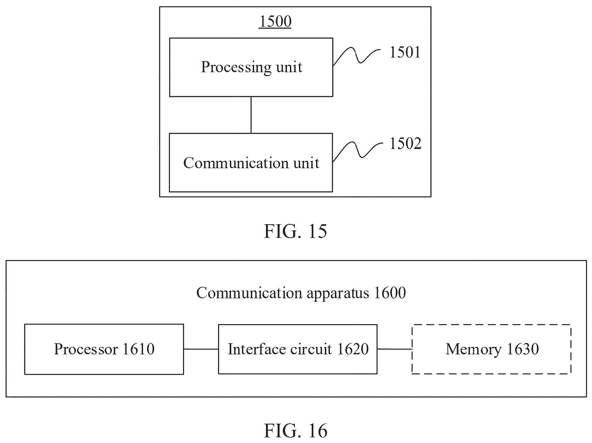

Based on a same concept as that of the foregoing descriptions, as shown in FIG. 15, an embodiment of this application further provides a communication apparatus 1500, configured to implement functions of the network device, the terminal device, or the application server in the foregoing method. For example, the apparatus may be a software module or a chip system. In embodiments of this application, the chip system may include a chip, or may include a chip and another discrete component. The communication apparatus 1500 may include a processing unit 1501 and a communication unit 1502.

In this embodiment of this application, the communication unit may also be referred to as a transceiver unit, and may include a sending unit and/or a receiving unit, which are respectively configured to perform a sending step and a receiving step of the network device, the terminal device, or the application server in the foregoing method embodiments.

The following describes in detail the communication apparatus provided in embodiments of this application with reference to FIG. 15 and FIG. 16. It should be understood that descriptions of the apparatus embodiments correspond to the descriptions of the method embodiments. Therefore, for content not described in detail, refer to the method embodiments. For brevity, details are not described herein again.

The processing unit may also be referred to as a processor, a processing board, a processing module, a processing apparatus, or the like. The communication unit may also be referred to as a transceiver, a transceiver device, a transceiver apparatus, or the like.

In an implementation, the communication apparatus 1500 may perform the following functions.

The communication unit is configured to receive a synchronization signal from a network device based on a synchronization sequence, where the synchronization sequence includes a first ZC sequence and a conjugate sequence of the first ZC sequence, or the synchronization sequence includes a sum of the first ZC sequence and the conjugate sequence of the first ZC sequence.

The processing unit is configured to detect a wake-up signal based on the synchronization signal.

In an implementation, the communication apparatus 1500 may perform the following functions.

The processing unit is configured to generate a synchronization signal based on a synchronization sequence, where the synchronization sequence includes a first ZC sequence and a conjugate sequence of the first ZC sequence, or the synchronization sequence includes a sum of the first ZC sequence and the conjugate sequence of the first ZC sequence.

The communication unit is configured to send the synchronization signal.

The foregoing is merely an example. The processing unit 1501 and the communication unit 1502 may further perform other functions. For more detailed descriptions, refer to the related descriptions in the foregoing method embodiments. Details are not described herein.

FIG. 16 shows a communication apparatus 1600 according to an embodiment of this application. The apparatus shown in FIG. 16 may be an implementation of a hardware circuit of the apparatus shown in FIG. 15. The communication apparatus is applicable to the foregoing flowcharts, to perform functions of the network device, the terminal device, or the application server in the foregoing method embodiments. For ease of description, FIG. 16 shows only main components of the communication apparatus.

As shown in FIG. 16, a communication apparatus 1600 includes a processor 1610 and an interface circuit 1620. The processor 1610 and the interface circuit 1620 are coupled to each other. It can be understood that the interface circuit 1620 may be a transceiver or an input/output interface.

Optionally, in an implementation, the communication apparatus 1600 may further include a memory 1630, configured to store instructions executed by the processor 1610, store input data required by the processor 1610 to run the instructions, or store data generated after the processor 1610 runs the instructions.

When the communication apparatus 1600 is configured to implement the foregoing method, the processor 1610 is configured to implement the functions of the processing unit 1501, and the interface circuit 1620 is configured to implement the functions of the communication unit 1502.

It should be understood that the processor in embodiments of this application may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The general-purpose processor may be a microprocessor or any regular processor or the like.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to the processor, to enable the processor to read information from the storage medium and write the information into the storage medium. Certainly, the storage medium may be a component of the processor. The processor and the storage medium may be located in an ASIC.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover the modifications and variations of this application, provided that they fall within the scope of the following claims and equivalent technologies of this application.

## Claims

1. A signal transmission method, performed by a terminal device or a module used in the terminal device, and comprising:

   receiving a synchronization signal from a network device based on a synchronization sequence, wherein the synchronization sequence comprises a first ZC sequence and a conjugate sequence of the first ZC sequence, or the synchronization sequence comprises a sum of the first ZC sequence and the conjugate sequence of the first ZC sequence; and
detecting a wake-up signal based on the synchronization signal.

2. The method according to claim 1, wherein the synchronization sequence occupies one symbol; and
when the synchronization sequence comprises the first ZC sequence and the conjugate sequence of the first ZC sequence, the first ZC sequence occupies a first part of the symbol, the conjugate sequence of the first ZC sequence occupies a second part of the symbol, and duration of the first part is the same as duration of the second part.

3. The method according to claim 1, wherein the synchronization sequence occupies two consecutive symbols; and
when the synchronization sequence comprises the first ZC sequence and the conjugate sequence of the first ZC sequence, the first ZC sequence occupies a first symbol of the two symbols, and the conjugate sequence of the first ZC sequence occupies a second symbol of the two symbols.

4. The method according to any one of claims 1 to 3, wherein the detecting the wake-up signal based on the synchronization signal comprises:

determining a time offset based on the synchronization signal, wherein the time offset is caused by a frequency offset of the synchronization signal; and
adjusting, based on the time offset, a location of a detection window of correlation detection corresponding to the wake-up signal, and detecting the wake-up signal based on the adjusted detection window.

5. The method according to claim 4, wherein the determining the time offset based on the synchronization signal comprises:

performing correlation processing on the synchronization sequence and the synchronization signal, to determine a time-domain location of a first correlation peak corresponding to the first ZC sequence and a time-domain location of a second correlation peak corresponding to the conjugate sequence of the first ZC sequence; and
determining the time offset based on the time-domain location of the first correlation peak and the time-domain location of the second correlation peak.

6. The method according to claim 5, wherein the time offset is a difference between a time-domain location of a third correlation peak and the time-domain location of the first correlation peak, the time-domain location of the third correlation peak is determined based on a time reference point and preset duration, and the time reference point is determined based on the time-domain location of the first correlation peak and the time-domain location of the second correlation peak.

7. The method according to claim 6, wherein when the synchronization sequence occupies the two consecutive symbols, and the synchronization sequence comprises the first ZC sequence and the conjugate sequence of the first ZC sequence, the preset duration is half of a length of the symbols; or

when the synchronization sequence occupies the one symbol, and the synchronization sequence comprises the first ZC sequence and the conjugate sequence of the first ZC sequence, the preset duration is 1/4 of a first length, and the first length is a difference between a length of the symbol and a length of a cyclic prefix of the symbol; or
when the synchronization sequence occupies the one symbol, and the synchronization sequence comprises the sum of the first ZC sequence and the conjugate sequence of the first ZC sequence, the preset duration is 0.

8. The method according to any one of claims 4 to 7, wherein the adjusting, based on the time offset, the location of the detection window of correlation detection corresponding to the wake-up signal comprises:
shifting the location of the detection window by the time offset based on an initial location of the detection window.

9. The method according to any one of claims 1 to 8, wherein a sequence corresponding to the wake-up signal is a sequence obtained by performing cyclic shift on the first ZC sequence.

10. A signal transmission method, performed by a network device or a module used in the network device, and comprising:

generating a synchronization signal based on a synchronization sequence, wherein the synchronization sequence comprises a first ZC sequence and a conjugate sequence of the first ZC sequence, or the synchronization sequence comprises a sum of the first ZC sequence and the conjugate sequence of the first ZC sequence; and
sending the synchronization signal.

11. The method according to claim 10, wherein the synchronization sequence occupies one symbol; and
when the synchronization sequence comprises the first ZC sequence and the conjugate sequence of the first ZC sequence, the first ZC sequence occupies a first part of the symbol, the conjugate sequence of the first ZC sequence occupies a second part of the symbol, and duration of the first part is the same as duration of the second part.

12. The method according to claim 10, wherein the synchronization sequence occupies two consecutive symbols; and
when the synchronization sequence comprises the first ZC sequence and the conjugate sequence of the first ZC sequence, the first ZC sequence occupies a first symbol of the two symbols, and the conjugate sequence of the first ZC sequence occupies a second symbol of the two symbols.

13. The method according to any one of claims 10 to 12, wherein the method further comprises:
sending a wake-up signal, wherein a sequence corresponding to the wake-up signal is a sequence obtained by performing cyclic shift on the first ZC sequence.

14. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 13 by using a logic circuit or by executing code instructions.

15. A computer-readable storage medium, wherein the storage medium stores a computer program or instructions, and when the computer program or the instructions are executed by a communication apparatus, the method according to any one of claims 1 to 13 is implemented.

16. A chip, comprising a processor and a memory, wherein
the processor is configured to execute a computer program or instructions stored in the memory, to enable a communication apparatus comprising the chip to implement the method according to any one of claims 1 to 13.

17. A computer program product, comprising instructions, wherein when the instructions are executed by a computer, the method according to any one of claims 1 to 13 is implemented.

FIG. 1

FIG. 2

| Terminal device | | Network device |
| --- | --- | --- |

Step 301: The network device generates a synchronization signal based on a synchronization sequence

Step 302: The network device sends the synchronization signal to the terminal device

Synchronization signal

Step 303: The network device sends a wake-up signal

Wake-up signal

Step 304: The terminal device detects the wake-up signal based on the synchronization signal

FIG. 3

| CP | Synchronization sequence |
| --- | --- |

Synchronization signal

FIG. 4

... ⊠ ⧄ ⊠ ⊠ ...

T        T

⊠
Synchronization signal

⧄
Wake-up signal

FIG. 5

EP 4 697 823 A1

| CP | First ZC sequence | CP | Conjugate sequence of the first ZC sequence |

Symbol 0          Symbol 1

FIG. 6

| CP | First ZC sequence | Conjugate sequence of the first ZC sequence |

First part          Second part

FIG. 7

| CP | Synchronization sequence |

FIG. 8

| CP | First ZC sequence | CP | Conjugate sequence of the first ZC sequence |

Time offset     T1/2

t1          t4          t3          t2
First       Third       Time reference point    Second correlation peak
correlation correlation
peak        peak

FIG. 9

16

| CP | First ZC sequence | Conjugate sequence of the first ZC sequence |
|---|---|---|

Time offset

1/4 of a first length

t1
First correlation peak

t4
Third correlation peak

t3
Time reference point

t2
Second correlation peak

Time domain

FIG. 10

| CP | Synchronization sequence |
|---|---|

Time offset

t1
First correlation peak

t3 or t4
Time reference point

Third correlation peak

t2
Second correlation peak

Time domain

FIG. 11

17

Synchronization signal

Time offset

Initial location of a
detection window

Adjusted detection
window

FIG. 12

| | Symbol 1 | | | Symbol 2 |
|---|---|---|---|---|
| CP | First ZC sequence | Conjugate sequence of the first ZC sequence | CP | Wake-up signal |

L1      L2

t1     Time reference point     t2

Time domain

FIG. 13

EP 4 697 823 A1

Symbol

| CP | (hatched) | Wake-up signal |
|----|-----------|----------------|

Initial location of a
detection window when
a cyclic shift is 0

(a)

Time
domain

Symbol

L

| CP | (hatched) | (hatched) | |
|----|-----------|-----------|--|

Initial location
of a detection
window when a
cyclic shift is 0

Initial location of
the detection
window when the
cyclic shift is not 0

(b)

Time
domain

FIG. 14

1500

Processing unit — 1501

Communication unit — 1502

FIG. 15

Communication apparatus 1600

Processor 1610 — Interface circuit 1620 — Memory 1630

FIG. 16

## INTERNATIONAL SEARCH REPORT

| International application No. |
| --- |
| **PCT/CN2024/091459** |

### A. CLASSIFICATION OF SUBJECT MATTER

H04W56/00(2009.01)i

According to International Patent Classification (IPC) or to both national classification and IPC

### B. FIELDS SEARCHED

Minimum documentation searched (classification system followed by classification symbols)

IPC:H04W,H04B

Documentation searched other than minimum documentation to the extent that such documents are included in the fields searched

Electronic data base consulted during the international search (name of data base and, where practicable, search terms used)

CNTXT, DWPI, ENTXT, ENTXTC, 3GPP, CNKI: 共轭, 唤醒, 唤醒信号, 检测, 频率偏移, 频偏, 同步, signal, syn, synchronization, wus, wake?up, test+, detect+, monitor+

### C. DOCUMENTS CONSIDERED TO BE RELEVANT

| Category* | Citation of document, with indication, where appropriate, of the relevant passages | Relevant to claim No. |
| --- | --- | --- |
| X | CN 107431679 A (HUAWEI TECHNOLOGIES CO., LTD.) 01 December 2017 (2017-12-01) description, page 11, line 1-page 17, line 8, and page 22, line 20-page 23, line 8 | 10-12, 14-17 |
| Y | CN 107431679 A (HUAWEI TECHNOLOGIES CO., LTD.) 01 December 2017 (2017-12-01) description, page 11, line 1-page 17, line 8, and page 22, line 20-page 23, line 8 | 1-9, 13 |
| Y | WO 2023051124 A1 (HUAWEI TECHNOLOGIES CO., LTD.) 06 April 2023 (2023-04-06) description, paragraph 64 | 1-9, 13 |
| X | CN 106789811 A (HARBIN INSTITUTE OF TECHNOLOGY) 31 May 2017 (2017-05-31) claims 1-7 | 10-12, 14-17 |
| A | CN 110768694 A (SHENZHEN HUAZHIXINLIAN TECHNOLOGY CO., LTD.) 07 February 2020 (2020-02-07) entire document | 1-17 |
| A | WO 2019168660 A1 (KYOCERA CORP.; KALHAN AMIT) 06 September 2019 (2019-09-06) entire document | 1-17 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 July 2024** | **11 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/091459** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111095993 A (QUALCOMM INC.) 01 May 2020 (2020-05-01)<br>entire document | 1-17 |

Form PCT/ISA/210 (second sheet) (July 2022)

23

**INTERNATIONAL SEARCH REPORT**
Information on patent family members

| International application No. |
|---|
| **PCT/CN2024/091459** |

| Patent document cited in search report | | | Publication date (day/month/year) | Patent family member(s) | | | Publication date (day/month/year) |
|---|---|---|---|---|---|---|---|
| CN | 107431679 | A | 01 December 2017 | EP | 3343856 | A1 | 04 July 2018 |
| | | | | EP | 3343856 | A4 | 12 September 2018 |
| | | | | EP | 3343856 | B1 | 28 October 2020 |
| | | | | US | 2018220387 | A1 | 02 August 2018 |
| | | | | US | 10362548 | B2 | 23 July 2019 |
| | | | | WO | 2017049716 | A1 | 30 March 2017 |
| WO | 2023051124 | A1 | 06 April 2023 | None | | | |
| CN | 106789811 | A | 31 May 2017 | None | | | |
| CN | 110768694 | A | 07 February 2020 | None | | | |
| WO | 2019168660 | A1 | 06 September 2019 | None | | | |
| CN | 111095993 | A | 01 May 2020 | BR | 112020004932 | A2 | 15 September 2020 |
| | | | | EP | 3682677 | A1 | 22 July 2020 |
| | | | | EP | 3682677 | B1 | 22 March 2023 |
| | | | | KR | 20200051631 | A | 13 May 2020 |
| | | | | KR | 102178611 | B1 | 13 November 2020 |
| | | | | US | 2019090192 | A1 | 21 March 2019 |
| | | | | US | 10743257 | B2 | 11 August 2020 |
| | | | | EP | 3682678 | A1 | 22 July 2020 |
| | | | | CA | 3072607 | A1 | 21 March 2019 |
| | | | | CA | 3072607 | C | 25 October 2022 |
| | | | | JP | 2020534736 | A | 26 November 2020 |
| | | | | JP | 6997298 | B2 | 17 January 2022 |
| | | | | US | 2019090193 | A1 | 21 March 2019 |
| | | | | US | 10945205 | B2 | 09 March 2021 |
| | | | | CA | 3072615 | A1 | 21 March 2019 |
| | | | | CA | 3072615 | C | 01 August 2023 |
| | | | | TW | 201921993 | A | 01 June 2019 |
| | | | | TWI | 720344 | B | 01 March 2021 |
| | | | | US | 2021029639 | A1 | 28 January 2021 |
| | | | | US | 11463956 | B2 | 04 October 2022 |
| | | | | TW | 201921992 | A | 01 June 2019 |
| | | | | TWI | 752263 | B | 11 January 2022 |
| | | | | BR | 112020004946 | A2 | 15 September 2020 |
| | | | | KR | 20200051630 | A | 13 May 2020 |
| | | | | KR | 102291428 | B1 | 18 August 2021 |
| | | | | WO | 2019055421 | A1 | 21 March 2019 |
| | | | | EP | 3796720 | A1 | 24 March 2021 |
| | | | | WO | 2019055419 | A1 | 21 March 2019 |
| | | | | JP | 2020534735 | A | 26 November 2020 |
| | | | | JP | 6905150 | B2 | 21 July 2021 |

Form PCT/ISA/210 (patent family annex) (July 2022)

**EP 4 697 823 A1**

REFERENCES CITED IN THE DESCRIPTION

**Patent documents cited in the description**

- CN 202310533201